# EUROPÄISCHE PATENTSCHRIFT

(11) **EP 2 581 264 B1**
(45) Veröffentlichungstag und Bekanntmachung des Hinweises auf die Patenterteilung: **12.06.2019**
(21) Anmeldenummer: 12187996.9
(22) Anmeldetag: 10.10.2012
(51) Int. Cl.: B60P 3/14

(54) **Klappregal**
Foldable shelf
Étagère repliable

(30) Priorität: 10.10.2011 DE 102011115552
(43) Veröffentlichungstag der Anmeldung: 17.04.2013
(73) Patentinhaber: Sommer GmbH, 06636 Laucha an der Unstrut (DE)
(72) Erfinder: Fieker, Heinrich, 31675 Bückeburg (DE)
(74) Vertreter: Weickmann & Weickmann PartmbB

(56) Entgegenhaltungen:
- WO-A1-97/41755
- NL-C2- 1 005 951
- US-A1- 2005 211 140
- US-A1- 2006 033 351
- US-B1- 6 270 138
- US-B1- 7 338 110

## Beschreibung

### I. Anwendungsgebiet

Die Erfindung betrifft ein Klappregal zum Einbau beispielsweise in den Laderaum eines Nutzfahrzeuges, insbesondere eines Kastenwagens.

Die NL 1 005 951 C2 offenbart den Oberbegriff des Anspruchs 1.

### II. Technischer Hintergrund

Gerade Kastenwägen der Gewichtsklasse bis 3,5 t Gesamtgewicht werden von Paketdiensten sehr häufig zur Auslieferung von Paketen an Endkunden benutzt.

Dementsprechend muss der Laderaum eines solchen z. B. Kastenwagens individuell nutzbar sein, also z. B. für eine relativ geringe Anzahl großer Ladegüter ebenso wie für relativ kleine Pakete.

Gerade im letzten Fall ist es sinnvoll, diese große Anzahl von Paketen übersichtlich im Inneren des Laderaumes, z. B vorsortiert, unterzubringen.

Aus diesem Grund ist es bereits bekannt, im Inneren solcher Nutzfahrzeuge entlang der Seitenwände Klappregale anzubringen, die aufrechtstehende Säulen besitzen, die an den Innenseiten der Wände des Nutzfahrzeuges befestigt sind und von denen Regalböden aus in das Innere des Laderaumes vorstehen, wenn sie benötigt werden, also wenn z. B. eine große Anzahl kleiner Pakete transportiert werden muss.

Diese Regalböden können jedoch in eine vertikale oder annähernd vertikale, deaktivierte Lage hochgeklappt werden, wenn sie nicht benötigt werden, weil beispielsweise eine nur geringe Anzahl großvolumiger Ladegüter transportiert werden soll, wofür der verbleibende Freiraum in der Mitte des Laderaumes zwischen den aktivierten herabgeklappten Regalböden nicht mehr ausreichen würde.

Hinsichtlich der bekannten Klappregale gilt es eine Reihe von Problempunkten im Auge zu behalten:
- Zum einen sollen diese Klappregale natürlich möglichst leicht und dennoch stabil sein, um die Nutzlast des Nutzfahrzeuges nicht zu sehr zu verringern.
- Zum anderen sollen die Klappregale im deaktivierten Zustand möglichst wenig Laderaum beanspruchen.
- Des Weiteren sollen solche Klappregale mit möglichst wenig Aufwand an die unterschiedlichen Bauformen der Nutzfahrzeuge, in die sie eingebaut werden sollen, angepasst werden. Denn gerade die hier in Rede stehenden Kastenwägen besitzen nicht nur unterschiedliche Abmessungen, sondern vor allem sind die Seitenwände in der Regel nicht gerade, sondern im oberen Bereich nach Innen gebogen.
- Des Weiteren ist der gesamte Aufbau eines solchen Kastenwagens so konstruiert, dass die Außenhaut, also Seitenwände und Dach, an in Längsrichtung beabstandeten, bogenförmigen Versteifungsprofilen befestigt sind, die von der Bodenfläche aus aufragen.

Die Abstände sowie die Form dieser Versteifungsprofile sind bei jedem Fahrzeugtyp jedoch andere.
- Darüber hinaus haben die Kunden meist unterschiedliche Wünsche hinsichtlich der Ladungssicherung, die in den herabgeklappten, aktivierten Regalböden abgelegt sind. Meist sollen hier die im jeweiligen Land geltenden, aktuellen Normen erfüllt werden.

### III. Darstellung der Erfindung

### a) Technische Aufgabe

Es ist daher die Aufgabe gemäß der Erfindung, ein Klappregal sowie einen Baukasten zu seiner Erstellung zu bieten, das ein geringes Gewicht besitzt und im deaktivierten Zustand nur wenig Laderaum beansprucht und in unterschiedlichen Nutzfahrzeugen mit möglichst geringem Aufwand anpassbar und montierbar ist.

### b) Lösung der Aufgabe

Diese Aufgabe wird durch die Merkmale des Anspruches 1 und 13 gelöst.

Vorteilhafte Ausführungsformen ergeben sich aus den Unteransprüchen.

Indem jeder Regalboden im Zwischenraum zwischen zwei benachbarten Säulen angeordnet ist, ergibt sich die Möglichkeit, dass er in der deaktivierten, hochgeklappten Lage in den Tiefenbereich zwischen den Säulen zumindest teilweise eintaucht und damit nicht mit seiner gesamten Dicke über den Tiefenbereich der Säulen hinaus in den Laderaum vorsteht.

Wie weit ein Regalboden im hochgeklappten Zustand in den Tiefenbereich eintaucht, hängt einerseits von der Dicke, also dem Tiefenbereich, der Säulen ab, andererseits auch von der Dicke der Regalböden, aber auch von der Krümmung der Säulen, vor allem im oberen Bereich des Klappregals, die bewirkt, dass die geraden Regalböden nur teilweise in den Tiefenbereich eintauchen können.

Zu diesem Zweck sind die Regalböden nicht an der in den Laderaum weisenden Vorderseite, sondern in den Seiten der Säulen gelagert, und zwar an einem möglichst weit an der Außenseite der Säulen liegenden Lagerungspunkt.

Zur Befestigung der Säulen des Klappregals im oberen Bereich am Aufbau des Nutzfahrzeuges dient eine Längstraverse des Klappregals, die in Verlaufsrichtung des Regals angeordnet ist, insbesondere ein Längsrohr. Dieses Längsrohr kann mit gleichen oder unterschiedlichen Schellen einerseits mit jeder der Säulen des Klappregals verbunden werden, andererseits aber auch mit den Versteifungsprofilen des Daches oder den Seitenwänden des Aufbaus des Nutzfahrzeuges, die sich bei jedem Nutzfahrzeugtyp an anderen Längspositionen befinden und in aller Regel nicht mit den Längspositionen der Säulen des Klappregals übereinstimmen, deren Abstand von der Länge der Regalböden bestimmt wird.

Auf diese Art und Weise kann mittels der Längstraverse das Klappregal im oberen Bereich an jeder Art von Nutzfahrzeugaufbauten befestigt werden. Die Befestigung am unteren Ende der Säule ist unproblematisch, da dort die Verschraubung mittels einfacher Winkel in der Regel gegenüber dem Boden des Nutzfahrzeuges erfolgt.

Die Längstraverse, insbesondere das Längsrohr, kann sich dabei im oberen Bereich seitlich neben den Säulen, also Richtung Mitte des Laderaums an die Säulen anschließend, befinden oder oberhalb der Enden der Säulen zwischen den Säulen und dem Dach des Laderaumes.

Um Gewicht zu sparen, kann diese Längstraverse, die insbesondere als Längsrohr ausgebildet ist, auch aus einem faserverstärkten Kunststoff bestehen.

Vorzugsweise besitzt dieses Längsrohr dabei einen Außendurchmesser, der mindestens 50%, besser mindestens 80%, der Dicke der Säulen in Tiefenrichtung beträgt, höchstens aber 110% dieser Dicke der Säulen in Tiefenrichtung.

Die Regalböden selbst sind modular aufgebaut, um sie an den jeweiligen Kundenwunsch betreffend Längsrichtung und Tiefenrichtung mit geringem Aufwand anpassen zu können:
In Tiefenrichtung besteht der Regalboden von vorne nach hinten, also im herabgeklappten Zustand vom Laderaum aus Richtung Außenwand des Laderaums, aus einem Frontprofil, einer Bodenplatte, die aus einem oder mehreren Bodenplattenprofilen zusammengesetzt ist, und einem Rückprofil. Diese Profile sind in Tiefenrichtung ineinandergesteckt und werden zusammengehalten, indem sie entweder gegeneinander verrastet werden und/oder ein über die gesamte Stirnfläche des gesamten Regalbodens durchgehendes Seitenprofil mit jedem der genannten längs verlaufenden Profile, zumindest aber mit dem ersten und letzten Profil, also Frontprofil und Rückprofil, fest verbunden wird.

Die in Verlaufsrichtung miteinander fluchtenden Regalböden können zusätzlich in ihrem Frontbereich miteinander verbunden werden, wobei diese Verbindung dann im hochgeklappten Zustand vor den Säulen durchgeht. Dies ermöglicht das Hochklappen einer ganzen Reihe von Regalböden mit einer einzigen Schwenkbewegung, benötigt aber zusätzlichen Raum im hochgeklappten Zustand in Tiefenrichtung, nämlich für die vor den Säulen durchgehende Verbindung der Regalböden.

Die einzelnen längs verlaufenden Profile der Regalböden erfüllen unterschiedliche Zwecke:
Das Frontprofil besitzt an seinem freien Ende einen nach oben aufragenden Schenkel, der ein Herabrutschen des Ladegutes vom Regalboden in den Laderaum hinein verhindern soll. Zu diesem Zweck verläuft der Regalboden im herabgeklappten, aktivierten Zustand auch nicht horizontal, sondern von der Säule aus leicht ansteigend Richtung Laderaummitte, etwa in einem Winkel von 10°.

Zusätzlich kann aus dem oberen Ende des nach oben ragenden Schenkels dieses Frontprofiles ein Profilgummi vorstehen, der eine erhöhte Reibung gegenüber einem darüber rutschenden Ladegut bewirkt und ein Herabfallen verhindern soll.

Das Frontprofil ist auf der zum Laderaum hinweisenden Seite, insbesondere in der Schräge am Übergang zwischen horizontalen und vertikalen Schenkel, vorzugsweise als Ladungssicherungsprofil ausgebildet, indem z. B. dort eine hinterschnittene Nut ausgebildet ist, deren Nutöffnung abschnittweise durch eine Bohrung vergrößert ist zum Einhängen von Ladungssicherungselementen.

Die Bodenplatte, insbesondere die einzelnen Bodenplatten-Profile, soll vor allem die ausreichende Stabilität durch die Belastung des Ladegutes aufnehmen, dabei aber gleichzeitig so leicht wie möglich sein. Sie kann aus Aluminium, aber auch aus Kunststoff bestehen.

Von den Bodenplattenprofilen gibt es vorzugsweise Profile mit unterschiedlicher Breite, also in Tiefenrichtung, und ggf. auch unterschiedlicher Stabilität, je nachdem, welches Ladegut aufgenommen werden soll.

Die Bodenplattenprofile sind meist C-förmige, nach unten offene Profile, die auf der einen Längsseite einen konischen Fortsatz und auf der anderen Längsseite eine sich konisch zum Grund hin vertiefende Nut oder Tasche aufweisen, die dem Zusammenstecken der Profile dienen.

Das Rückprofil besitzt ebenfalls an seinem freien Ende einen nach oben aufragenden Schenkel, welcher als Anschlag für das Ladegut dient.

Die Klappvorrichtung mit der Schwenk-Lagerung der Regalböden erfolgt in den Säulen, indem in den einander zugewandten Seitenflächen zweier benachbarter Säulen jeweils eine Bohrung, ggf. mit eingesetzter Buchse, zum Einstecken eines Lagerzapfens vorhanden ist, der von dem Klappregal nahe seines hinteren Endes jeweils in Verlaufsrichtung vorsteht.

Der Lagerzapfen ist an einem Haltewinkel ausgebildet, der Bestandteil des Seitenprofiles ist und von dessen hinterem Ende sich in Verlaufsrichtung des Regalbodens erstreckt und sich - im herabgeklappten Zustand - mit seinem unteren horizontalen Schenkel unter dem Regalboden und mit seinem aufrechten Schenkel hinter dem Regalboden nach oben aufragend verläuft.

Der Lagerzapfen ist für die Montage in einer Buchse des Haltewinkels verschiebbar und fixierbar.

Dieser Haltewinkel wird vorzugsweise mit einem entsprechenden, in Richtung Regalboden ragenden, T-förmigen Fortsatz in eine dort auf der Außenseite des Rückprofils vorhandene hinterschnittene Nut in Verlaufsrichtung eingesteckt und daher mit diesem formschlüssig verbunden und anschließend fixiert, meist durch Verschrauben. Der Haltewinkel erstreckt sich aber nur über den Endbereich des Rückprofiles, nicht über dessen gesamte Länge.

An dem im aktivierten Zustand des Regalbodens unteren horizontalen Schenkel ragt ferner eine Öse nach unten und schräg nach außen vor, die dem Befestigen des oberen Endes einer Gasdruckfeder dient, die mit ihrem unteren Ende unterhalb des Regalbodens an der Säule befestigt ist, und dementsprechend auch kürzer als der vertikale Abstand zweier übereinander liegender Regalböden ist. Die Öse ist von der Schwenkachse des Regalbodens soweit entfernt und so positioniert, dass in den beiden Endstellungen des Regalbodens sich die Öse im einen Fall außerhalb, im anderen Fall innerhalb des tiefsten Punktes des Kreisbogensegmentes befindet, den die Öse um die Schwenkachse beschreibt bei Verschwenken des Klappregals.

Dadurch entsteht eine Über-Totpunkt-Anordnung der Gasdruckfeder, die den Regalboden im herabgeklappten Zustand in die herabgeklappte Stellung vorspannt und im hochgeklappten, deaktivierten Zustand in die hochgeklappte Stellung vorspannt.

In die herabgeklappte Stellung wird der Regalboden in der Regel zusätzlich durch das aufgelegte Ladegut herabgedrückt.

Im Normalfall liegt der herabgeklappte Ladeboden mit seinem Haltewinkel auf einem von der Seitenfläche der Säule in den Zwischenraum zwischen den Säulen vorstehenden Anschlagbock auf, der auf seiner nach oben gerichteten Kontaktfläche insbesondere einen sich in Tiefenrichtung, also insbesondere zur Fahrzeugmitte hin, verjüngenden Anschlagkeil, der in Tiefenrichtung verschiebbar ist, besitzt, um ein Klappern der Regalböden auf den Anschlagböcken zu vermeiden und die Neigung der Regalböden einstellen zu können.

Da somit der Regalboden nur sehr weit hinten, nahe der Schwenkachse, abgestützt wird, ist das frei endende vordere Ende des Regalbodens durch Ladegut stark belastet. Abhängig vom Gewicht des Ladegutes kann daher zusätzlich eine Abhängung des vorderen Endes des Regalbodens gegenüber einem höher liegenden Punkt der Säule, z. B. mittels eines Seiles, vorgesehen sein, welches auch integraler Bestandteil eines seitlichen Ladungssicherungsnetzes sein kann.

Auf diese Art und Weise besteht ein Baukasten zum Erstellen eines Klappregals nach Kundenwunsch und Art des Nutzfahrzeuges, in dessen Laderaum das Klappregal eingebaut werden soll, aus
- wenigstens einer Sorte Regalböden,
- wenigstens einer Sorte von Klappvorrichtungen für die Regalböden,
- wenigstens einer Sorte von Längsstreben, insbesondere Längsrohren und
- wenigstens einer Sorte von Schellen zum Befestigen dieser Längsstrebe einerseits an den Säulen, andererseits am Laderaum des Nutzfahrzeuges, und darüber hinaus aus
- verschiedenen Sorten von Säulen, die in ihren Abmessungen und Krümmungen den einzelnen Nutzfahrzeugtypen angepasst sind, und
- ggf. aus verschiedenen Sorten von Dachwinkeln zur Befestigung der Längsstrebe an den Versteifungsprofilen des Aufbaus.

Der Baukasten kann ferner verschiedene Sorten, insbesondere unterschiedlich tiefe, Regalböden umfassen und zu diesem Zweck auch unterschiedlich breite Regalbodenprofile zum Zusammensetzen des Regalbodens. Die Länge der Regalböden wird durch Ablängen der entsprechenden längs verlaufenden Profile der Regalböden erzielt.

Der Baukasten kann ferner auch Ladungssicherungsnetze und andere Ladungssicherungsteile umfassen und/oder ein Abhängeseil zum zusätzlichen Stützen des freien Endes des herabgeklappten, aktivierten Regalbodens.

### c) Ausführungsbeispiele

Ausführungsformen gemäß der Erfindung sind im Folgenden beispielhaft näher beschrieben. Es zeigen:
- Figur 1 a bis c:: das erfindungsgemäße Klappregal,
- Figur 2:: Details an der Säule,
- Figur 3 a, b:: einen Regalboden,
- Figur 4 a bis d:: Einzelteile des Regalbodens,
- Figur 5 a:: einen nicht vollständigen Regalboden in Explosion Darstellung,

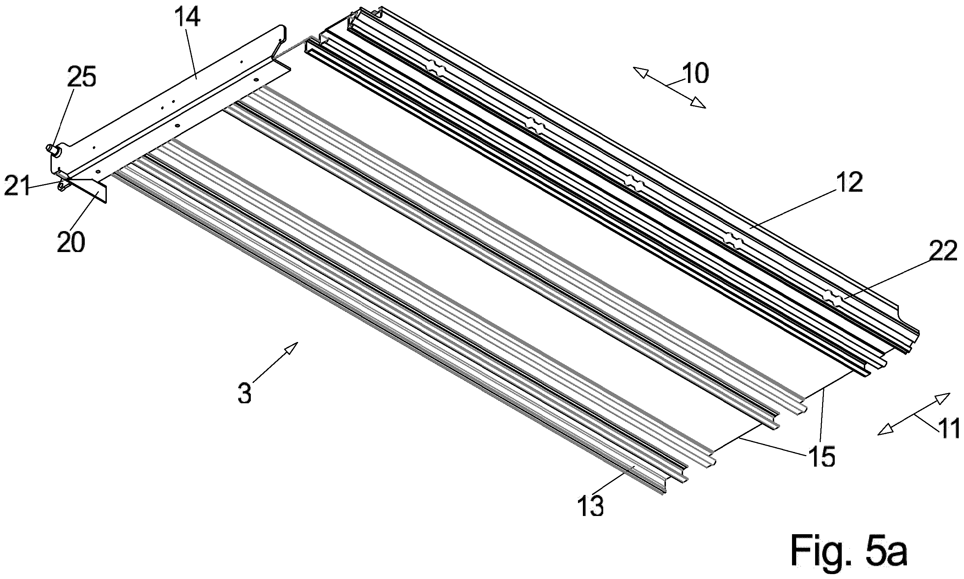

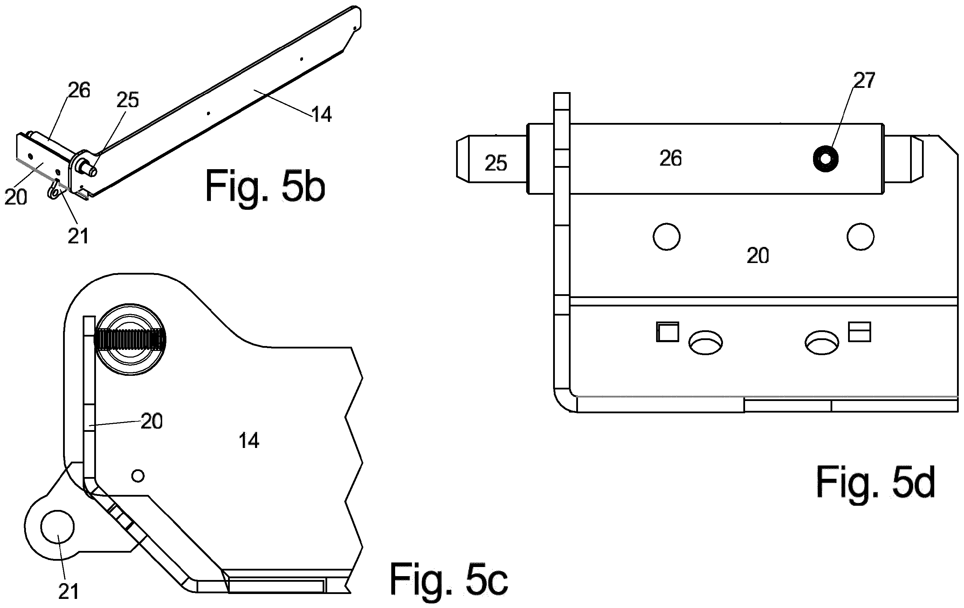

- Figur 5 b bis d:: das Seitenprofil eines Regalbodens und

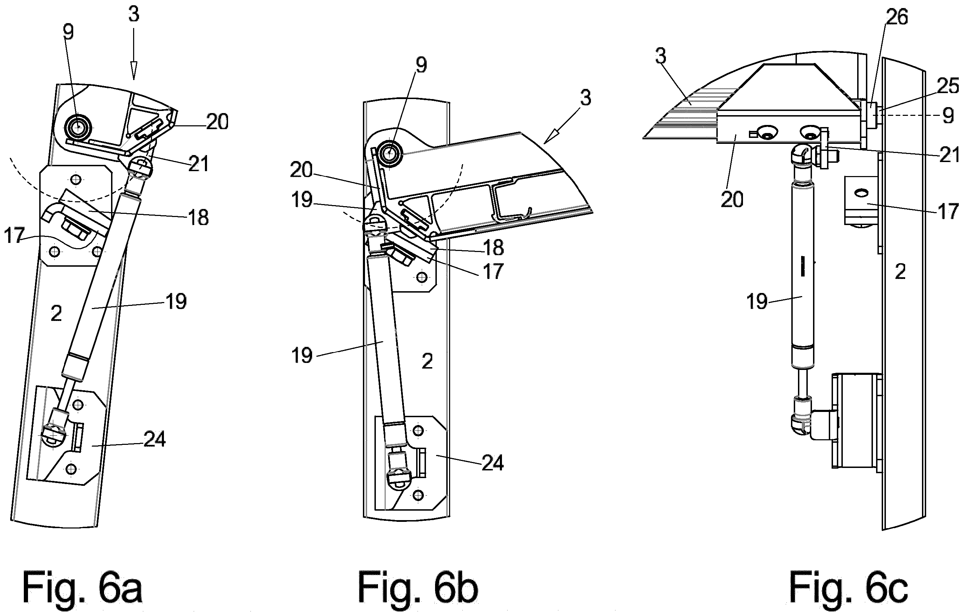

- Figur 6 a bis c:: die Klappvorrichtung für den Regalboden.

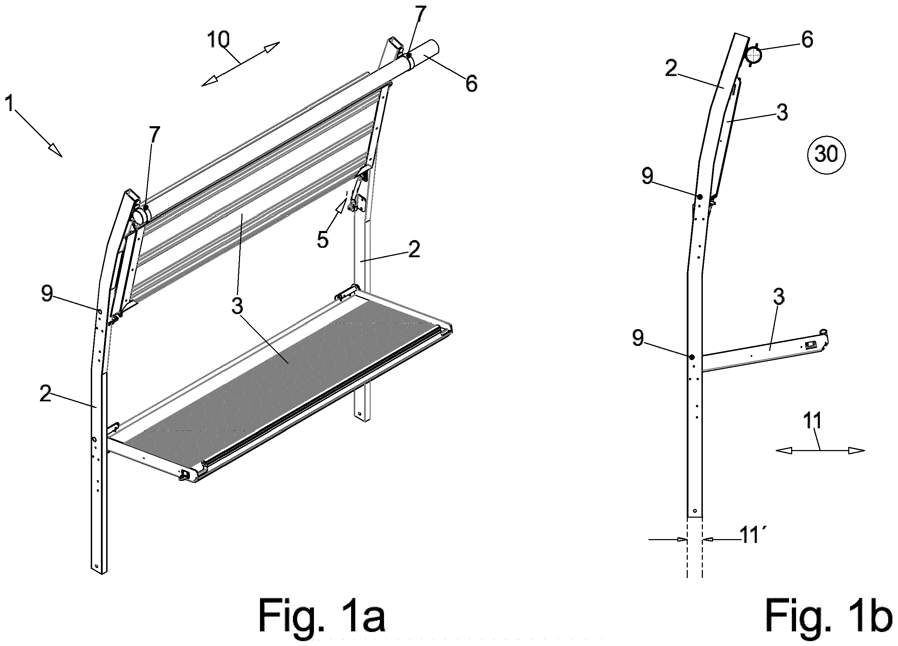

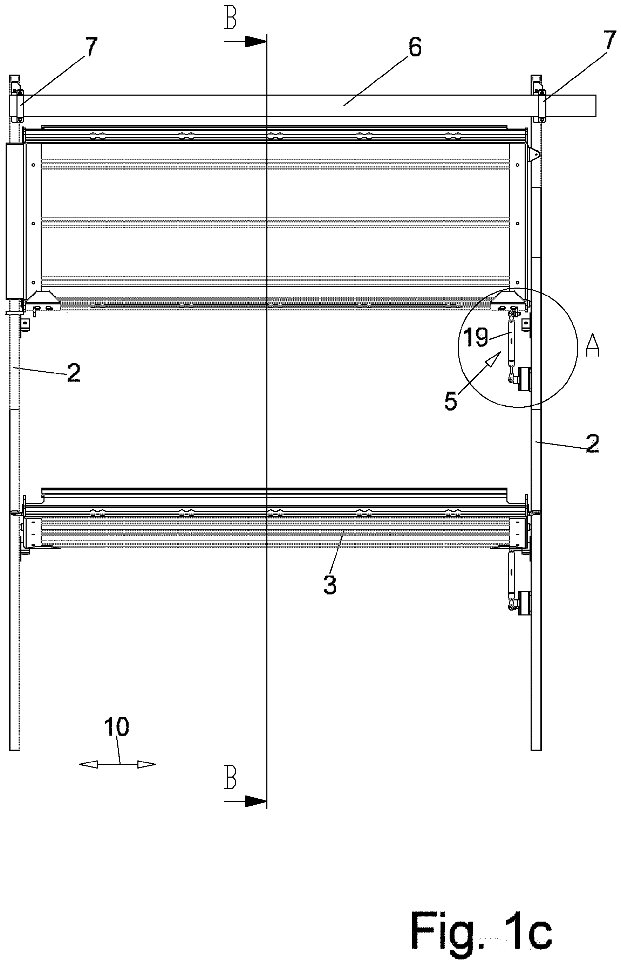

Figur 1a zeigt das Klappregal 1 mit nur zwei Säulen 2 und dazwischen übereinander nur zwei Regalböden 3 in perspektivischer Ansicht, in Figur 1b betrachtet in Verlaufsrichtung 10 des Klappregals 1 und in Figur 1c betrachtet quer zur Verlaufsrichtung 10, also in Tiefenrichtung 11. In der Praxis besteht ein solches Klappregal 1 natürlich aus in der Regel mehr als nur zwei Säulen 2 in Verlaufsrichtung 10, und meist auch mehr als nur zwei Regalböden 3 übereinander.

Die Krümmung der Säulen 2 resultiert aus den in der Regel nicht gerade, vertikal verlaufenden Wänden im Inneren des Laderaumes 30 eines Nutzfahrzeuges, an dem dieses Klappregal 1 montiert werden soll.

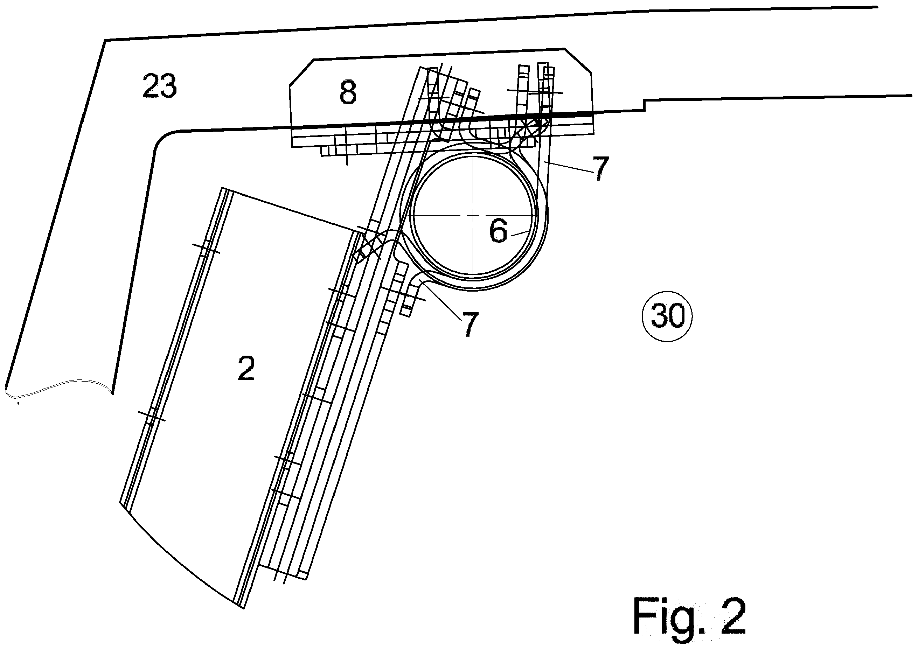

Die Befestigung der Säulen 2 erfolgt am unteren Ende mittels zum Beispiel nicht dargestellter Montagewinkel gegenüber dem Boden des Laderaumes 30. Am oberen Ende der Säulen 2 wird die Befestigung dadurch erschwert, dass dort - am Übergang zwischen den Seitenwänden und dem Dach des Laderaumes 30 - in der Regel keine ebene, ausreichend stabile Fläche zum Verschrauben zur Verfügung steht, denn der Aufbau des Laderaumes 30 ist in der Regel so aufgebaut, dass die Außenhaut von in Querrichtung verlaufenden, sich entlang der Wände nach oben und unter dem Dach erstreckende Versteifungsprofilen 23 getragen wird, und nur an diesen Versteifungsprofilen 23 (siehe Figur 2) ist eine stabile Befestigung der Säulen 2 des Klappregals 1 möglich:
Zu diesem Zweck werden die oberen Bereiche der Säulen 2 des Klappregals 1 miteinander verbunden, indem ein Längsrohr 6 sich entlang der gesamten Länge des Klappregals 1 erstreckt, und mit Schellen 7 an jeder der Säulen 2 in deren oberen Bereichen fixiert wird. An den Längspositionen, an denen sich die Versteifungsprofile 23 des Aufbaus des Nutzfahrzeuges befinden, wird das Längsrohr 6 mittels weiterer Schellen 7 und daran befestigten Dachwinkeln 8 an den Versteifungsprofile 23 verschraubt. Dadurch ist eine zuverlässige Fixierung des oberen Endes des Klappregals 1 am Aufbau des Nutzfahrzeuges möglich, unabhängig davon, an welchen Positionen in Verlaufsrichtung 10 sich dessen Versteifungsprofile 23 befinden.

Einer der Grundgedanken des erfindungsgemäßen Klappregals 1 ist in Figur 1b an dem oberen, eingeklappten, deaktivierten Regalboden 3 ersichtlich:
Um die nötige Steifigkeit zu erreichen, muss ein Regalboden 3 eine bestimmte Dicke besitzen. Indem die Regalböden 3 sich jeweils nur im lichten Abstand zwischen zwei benachbarten Säulen 2 verschwenkbar montiert sind, liegen sie im hochgeklappten, deaktivierten Zustand zumindest mit einem Teil ihrer Dicke im Tiefenbereich 11' der Säulen 2, und stehen damit nicht mit ihrer gesamten Dicke zusätzlich zur Tiefe der Säulen 2 im deaktivierten Zustand in den Laderaum 30 hinein vor.

Jeder Regalboden 3 ist um eine Schwenkachse 9 an seinem, zur Außenwand des Laderaumes 30 hinweisenden, äußeren Endbereich in den beiden angrenzenden Säulen 2 gelagert, wie später im Detail beschrieben, und wird um diese Schwenkachse 9 mittels einer Klappvorrichtung 5 verschwenkt, die das manuelle verschwenken mittels einer Gasdruckfeder 19 unterstützt.

Wie die Figuren 6 betrachtet in Verlaufsrichtung 10 zeigen, ist die Gasdruckfeder 19 mit ihrem unteren Ende an der Säule 2 befestigt, und zwar schwenkbar an einem Lagerbock 24 gelagert, der auf der Seitenfläche der Säule 2, also in deren Tiefenbereich 11', aufgeschraubt ist. Mit ihrem oberen Ende greift die Gasdruckfeder 19 am Regalboden 3 an, und zwar schwenkbar gelagert in einer Öse 21, die von einem Haltewinkel 20 nach unten und außen vorsteht, der sich im hinteren Endbereich des Regalbodens 3 befindet, wie später erläutert wird.

Dieser Befestigungspunkt, also die Öse 21, ist bezüglich der Schwenkachsen 9 des Regalbodens 3 so positioniert, dass sie sich sowohl in der aktivierten (Figur 6b) als auch in der hochgeklappten, deaktivierten Lage (Figur 6a) des Regalbodens 3 unterhalb der Schwenkachse 9 befindet, und zwar - betrachtet in Verlaufsrichtung 10 - jeweils auf derjenigen Seite der Schwenkachse 9, der die Gasdruckfeder 19 den Regalboden 3 in beiden Stellungen jeweils in diese Stellung vorspannt, also eine Über-Totpunkt-Anordnung des oberen Angriffspunktes der Gasdruckfeder 19. Die Mitte der Öse 21 beschreibt also um die Schwenkachse 9 einen Kreisbogen, bei dem die maximal einnehmbaren Positionen jeweils nicht dem tiefsten Punkt des Kreisbogens entsprechen.

Im herabgeklappten, aktivierten Zustand liegt der Regalboden 3 mit dem Haltewinkel 20 auf dem in Richtung 11 verschiebbaren Anschlagkeil 18 eines Anschlagbockes 17 auf, der zu diesem Zweck an der richtigen Position unterhalb der Schwenkachse 9 und oberhalb des zugehörigen Lagerbockes 24 ebenfalls an der Seitenfläche der Säule 2 verschraubt wird.

Nur falls die Regalböden 3 im herabgeklappten Zustand mit besonders schwerem Ladegut belastet werden sollen, wird eine Abhängung des vorderen Bereiches des Regalbodens 3 mittels zum Beispiel eines Stahlseiles gegenüber den Säulen 2 montiert. Dieses nicht dargestellte Seil kann auch Bestandteil eines Netzes zur Ladungssicherung sein.

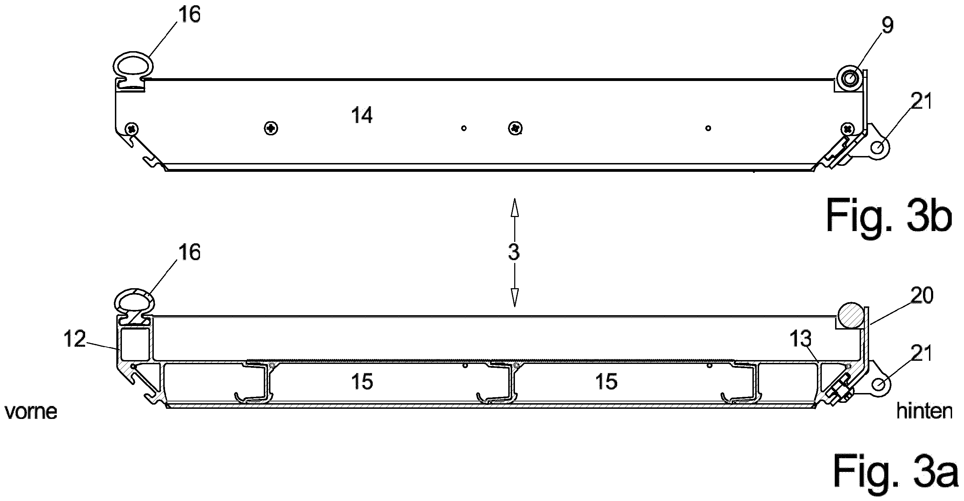

Die Figuren 3-5 zeigen den Aufbau des Regalbodens 3 und der Klappvorrichtung 5 im Detail:
Anhand der Figur 5a ist am besten zu erkennen, dass jeder Regalboden 3 aufgebaut ist aus mehreren in Verlaufsrichtung 10 des Klappregals 1 und damit des jeweiligen Regalbodens 3 verlaufenden Profilen, die in Tiefenrichtung 11 ineinander gesteckt und vorzugsweise verrastet werden:

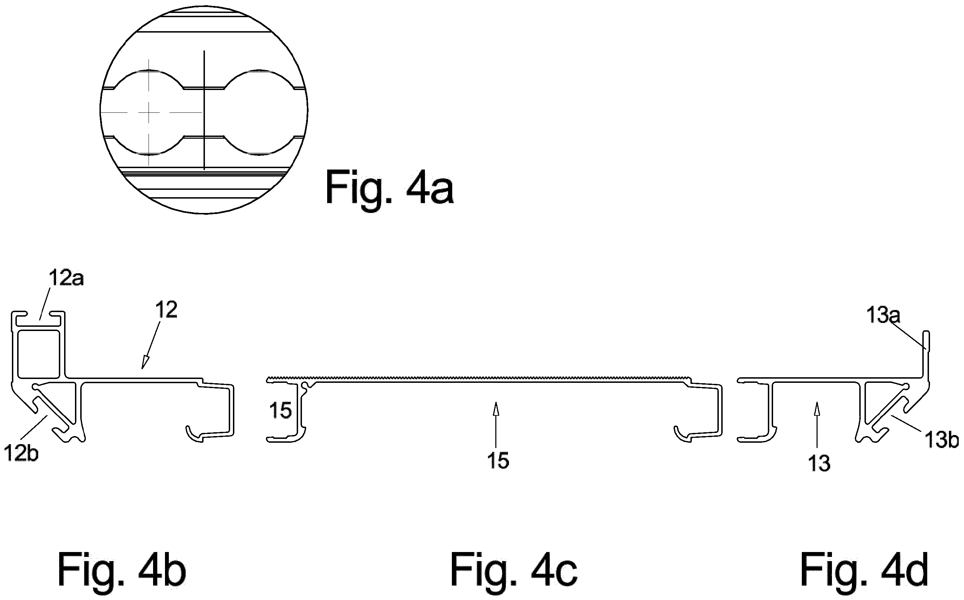

Von hinten nach vorn ist dies das Rückprofil 13, ein oder mehrere BodenPlattenprofile 15 sowie das Frontprofil 12, die zusammengebaut in Figur 3a und darüber hinaus in den Figuren 4 b bis d im Detail dargestellt sind:
Das Frontprofil 12 ist etwa L-förmig, wobei am freien Ende des nach oben aufragenden Schenkels eine hinterschnittene Nut 12 a vorhanden ist zum befestigen eines Profilgummis 16, wie er in Figur 3a vorhanden ist, und der verhindern soll, dass Ladung, die auf dem Regalboden 3 liegt, über die Vorderkante herab rutscht. In der schräg gestellten Außenseite des Winkels des Frontprofils 12 ist ebenfalls eine hinterschnittene Nut 12 b angeordnet, die bei Bedarf der Anbringung durch einfaches einschieben weiterer Elemente dient und/oder durch Anbringung weiterer Verbreiterungsbohrungen (Fig. 4a) zu einem Ladungssicherungsprofil 22 wird. Das freie Ende des längeren, horizontalen Schenkels, der ein nicht vollständig geschlossenes, nach unten offenes Kastenprofil darstellt, ist an seinem vorderen Ende verjüngend und in Dickenrichtung federnd ausgebildet, so dass er in eine entsprechende Tasche 15a eines sich anschließenden Bodenplattenprofiles 15 eingeschoben und verrastet werden kann, welches am anderen Ende den gleichen konischen Bereich besitzt.

Auf diese Art und Weise können ein oder mehrere Bodenplatten-Profile 15 angesteckt werden, und zum Schluss, an der Vorderkante des Regalbodens 3, wird auf das konische hintere Ende des letzten Bodenplattenprofiles 15 das ebenfalls wieder L-förmige Rückprofil 13 auf gesteckt.

Dieses Rückprofil 13 - das ebenfalls ein Ladungssicherungsprofil 22 enthalten kann - besitzt im Gegensatz zum Frontprofil 12 einen aufragenden Schenkel 13 a, der kein Kastenprofil darstellt sondern ein einfacher, frei endender Schenkel ist. Wie beim Frontprofil 12 ist jedoch in der Außenseite des Winkels des Rückprofiles 13 wiederum eine hinterschnittene Nut 13 b vorhanden, in welche - wie am besten in Figur 3a zu erkennen - der Haltewinkel 20 mit einem entsprechenden Fortsatz von beiden Seiten jeweils in den Endbereich dieser Nut 12a eingeschoben wird, der auch die Öse 21 zum Befestigen der Gasdruckfeder trägt.

Dieser Haltewinkel 20 ist integraler Bestandteil des Seitenprofiles 14, von denen jeweils eines auf beide Stirnflächen der Profile des Regalbodens 3 aufgesetzt wird, und von denen im hinteren Endbereich in Verlaufsrichtung 10 nach außen der Lagerzapfen 25 vorsteht, mit dem der Regalboden 3 anschließend in einer entsprechenden Buchse in der Seitenfläche jeweils einer der Säulen 2 gelagert wird.

Damit die Regalböden 3, deren Länge in Verlaufsrichtung sehr genau dem lichten Abstand zwischen den Säulen 2 entspricht, montiert werden können, ist der Lagerzapfen 25 in einer Buchse 26 geführt, die Bestandteil des Haltewinkels 20 ist und mit diesem fest verbunden ist. Für die Montage kann der Lagerzapfen 25 in die Buchse 26 hinein verschoben werden, bis sich der Regalboden 3 zwischen den Säulen 2 befindet, und anschließend der Lagerzapfen 25 vorwärts in die Lagerbohrung der Säule 2 hinein ausgefahren werden und in dieser Position mittels einer Klemmschraube 27 in der Buchse 26 in der gewünschten Axialposition gesichert werden.

Den fertig gestellten Regalboden 3, betrachtet in Verlaufsrichtung 10, zeigt Figur 3b.

In der schräg gestellten Außenfläche, also der hinterschnittenen Nut 12b des von Profiles 12 sind ferner in Abständen die offene Seite der Nut vergrößernde Bohrungen eingebracht, so dass diese Nut als Ladungssicherung-Profil 22 ausgebildet ist zum Einsetzen von Ladungssicherung-Mitteln.

### BEZUGSZEICHENLISTE

- 1: Klappregal
- 2: Säule
- 3: Regalboden
- 4: Zwischenraum
- 5: Klappvorrichtung
- 6: Längsrohr
- 7: Schelle
- 8: Dachwinkel
- 9: Schwenkachse
- 10: Verlaufsrichtung
- 11: Tiefenrichtung
- 11': Tiefenbereich
- 12: Frontprofil
- 12a: Nut
- 13: Rückprofil
- 14: Seitenprofil
- 15: Bodenplatte, Bodenplattenprofil
- 16: Profilgummi
- 17: Anschlagbock
- 18: Anschlagkeil
- 19: Gasdruckfeder
- 20: Haltewinkel
- 21: Öse
- 22: Ladungssicherungsprofil
- 23: Versteifungsprofil
- 24: Lagerbock
- 25: Lagerzapfen
- 26: Buchse
- 27: Klemmschraube
- 30: Nutzfahrzeug
- 31: Versteifungsprofil
- 32: Laderaum
- 33: Laderaum - Mitte, Fahrzeugmitte

## Patentansprüche

1. Klappregal (1) zum Einbau in etwa den Laderaum (30) eines Nutzfahrzeuges (32) mit
- aufrechtstehenden, in Verlaufsrichtung (10) des Klappregals (1) beabstandeten, Säulen (2),
- wenigstens einem an den Säulen (2) befestigten und um eine in Verlaufsrichtung (10) liegende Schwenkachse (9) zwischen einer aktivierten und einer deaktivierten Lage mittels einer Klappvorrichtung (5) klappbaren Regalboden (3),
wobei
- jeder Regalboden (3) im Zwischenraum (4) zwischen je zwei benachbarten Säulen (2) angeordnet ist,
- der Regalboden (3) aus Frontprofil (12), Rückprofil (13) und Seitenprofilen (14) sowie mindestens einer Bodenplatte (15) besteht,
**dadurch gekennzeichnet, dass**
- die Bodenplatte (15) ein Bodenplatten-Profil (26) ist,
- jeder Regalboden (3) aufgebaut ist aus mehreren in Verlaufsrichtung (10) des Klappregals (1) und damit des jeweiligen Regalbodens (3) verlaufenden Profilen, die in Tiefenrichtung (11) ineinander gesteckt und vorzugsweise verrastet werden.

2. Klappregal (1) nach Anspruch 1,
**dadurch gekennzeichnet, dass**
jeder Regalboden (3) so angeordnet ist, dass er in der deaktivierten Lage in Tiefenrichtung (11) sich wenigstens teilweise im Tiefenbereich (11') der Säulen (2) und insbesondere dabei möglichst wenig aus dem Tiefenbereich (11') in den restlichen Laderaum (30) zur Mitte (33) des Laderaums (30) hin vorsteht.

3. Klappregal (1) nach einem der vorhergehenden Ansprüche,
**dadurch gekennzeichnet, dass**
das Klappregal (1) eine Längstraverse, insbesondere ein Längsrohr (6), umfasst, welches im oberen Bereich einerseits mit den Säulen (2), insbesondere über Schellen (7), und andererseits mit den Versteifungsprofilen (31) des Laderaumes (30) des Nutzfahrzeuges (32), insbesondere über Dachwinkel (28), verbunden ist.

4. Klappregal (1) nach Anspruch 3,
**dadurch gekennzeichnet, dass**
die Längstraverse, insbesondere das Längsrohr (6), seitlich neben den Säulen (2) zur Fahrzeugmitte hin angeordnet ist oder oberhalb der Enden der Säulen (2) zwischen den Säulen (2) und dem Dach des Laderaums (32) und/oder das Längsrohr (6) aus Kunststoff, insbesondere aus faserverstärktem Kunststoff, besteht.

5. Klappregal (1) nach Anspruch 3 oder 4,
**dadurch gekennzeichnet, dass**
die Längstraverse, insbesondere das Längsrohr (6), einen Außendurchmesser von mindestens 50%, besser mindestens 80% und höchstens 110% der Erstreckung der Säulen (2) in Tiefenrichtung (11) besitzt.

6. Klappregal (1) nach einem der vorhergehenden Ansprüche,
**dadurch gekennzeichnet, dass**
die Regalböden (3) in Verlaufsrichtung (10) in ihrem Frontbereich, der im aktivierten Zustand zur Fahrzeugmitte (33) hin vorsteht, miteinander verbunden sind.

7. Klappregal (1) nach einem der vorhergehenden Ansprüche,
**dadurch gekennzeichnet, dass**
die Regalböden (3), insbesondere die Bodenplatten (15), aus Aluminium oder Kunststoff besteht.

8. Klappregal (1) nach einem der vorhergehenden Ansprüche,
**dadurch gekennzeichnet, dass**
im Frontprofil (12) ein nach oben vorstehender Profilgummi (16) angeordnet ist.

9. Klappregal (1) nach einem der vorhergehenden Ansprüche,
**dadurch gekennzeichnet, dass**
an den Seiten der Säulen (2) unterhalb der Schwenkachsen (9) Anschlagböcke (17) vorhanden sind zum Auflegen der Regalböden (3) im aktivierten, herabgeklappten Zustand, und die Anschlagböcke (17) insbesondere eine in Tiefenrichtung verschiebbare Auflage aus einem in Tiefenrichtung sich verjüngenden Anschlagkeil (18) aus Kunststoff besitzen.

10. Klappregal (1) nach einem der vorhergehenden Ansprüche,
**dadurch gekennzeichnet, dass**
das Rückprofil (13) an den seitlichen Enden im Innenwinkel eines Haltewinkels (20) aufliegt, der insbesondere an seiner Außenseite des im aktivierten Zustand unteren Schenkels eine Öse (21) zum Befestigen z. B. des oberen Endes einer Gasdruckfeder (19) aufweist, die mit ihrem unteren Ende an der Säule (2) befestigt ist und kürzer ist als der vertikale Abstand zweier übereinander angeordneter Regalböden (3).

11. Klappregal (1) nach Anspruch 10,
**dadurch gekennzeichnet, dass**
der obere Befestigungspunkt der Gasdruckfeder (19), insbesondere die Öse (21), so am Regalboden (3) relativ zur Schwenkachse (9) angeordnet ist, dass sich der Befestigungspunkt sowohl im aktivierten als auch im deaktivierten Zustand des Regalbodens (3) in einer Höhenlage unterhalb der Schwenkachse (9) befindet.

12. Klappregal (1) nach einem der vorhergehenden Ansprüche,
**dadurch gekennzeichnet, dass**
im Rückprofil (13) und/oder im Frontprofil (12) eine Ladungssicherungsvorrichtung, insbesondere ein Ladungssicherungsprofil (22) zum Einhängen handelsüblicher Ladungssicherungsgurte angeordnet ist.

13. Baukasten zum Erstellen eines Klappregals (1) mit
- wenigstens einer Sorte Regalböden (3),
- wenigstens einer Sorte von Klappvorrichtungen (5),
- wenigstens einer Sorte von Längsstreben, insbesondere Längsrohren (6),
- wenigstens einer Sorte von Schellen (7),
- ggf. verschiedenen Sorten von insbesondere unterschiedlich gekrümmten Säulen (2) und
- verschiedenen Sorten von Dachwinkeln (8),
wobei
- der Regalboden (3) aus Frontprofil (12), Rückprofil (13) und Seitenprofilen (14) sowie mindestens einer Bodenplatte (15) besteht,
**dadurch gekennzeichnet, dass**
- die Bodenplatte (15) ein Bodenplatten-Profil (26) ist,
- jeder Regalboden (3) aufgebaut ist aus mehreren in Verlaufsrichtung (10) des Klappregals (1) und damit des jeweiligen Regalbodens (3) verlaufenden Profilen, die in Tiefenrichtung (11) ineinander gesteckt und vorzugsweise verrastet werden.

14. Baukasten nach Anspruch 13,
**dadurch gekennzeichnet, dass**
der Baukasten verschiedene Sorten, insbesondere unterschiedlich lange und/oder unterschiedlich tiefe, Regalböden (3) umfasst und zu diesem Zweck unterschiedlich lange Frontprofile (12), Rückprofile (13) und Bodenplatten (15) der Regalböden (3) und/oder unterschiedlich tiefe Bodenplatten (15).

15. Baukasten nach einem der vorhergehenden Ansprüche,
**dadurch gekennzeichnet, dass**
der Baukasten ein Ladungssicherungsnetz umfasst, welches sich im aktivierten Zustand insbesondere automatisch zwischen den Säulen (2) und den Seitenprofilen (14) des Regalbodens (3) aufspannt und insbesondere eine Abhängung des aktivierten Regalbodens (3) von den Säulen (2) bewirkt, beispielsweise mittels eines in das Ladungssicherungsnetz integrierten Abhängeseiles.

## Claims

1. A folding rack (1) configured to be installed e.g. in a cargo space (30) of a commercial vehicle (32), the folding rack comprising:
- vertically oriented columns (2) that are offset in a direction of an extension (10) of the folding rack (1),
- at least one shelf (3) that is attached at the columns (2) and pivotable about a pivot axis (9) that is oriented in the direction of orientation (10) between an activated position and a deactivated position using a folding device (5),
wherein
- each shelf (3) is arranged in an intermediary space (4) between two adjacent columns (2),
wherein
- each shelf (3) includes a front profile (12), a rear profile (13) and side profiles (14) and at least one base plate (15),
**characterized in that**
- the base plate (15) is a base plate profile (26),
- each shelf (3) is made from several profiles that extend in a direction (10) of the folding rack (1) and thus of the respective shelf (3) that are inserted into each other in a depth direction (11) and advantageously interlocked with each other.

2. The folding rack (1) according to claim 1,
**characterized in that**
each shelf (3) is arranged so that it protrudes in the deactivated position in a depth direction (11) at least partially into a depth portion (11') of the columns (2) and thus in particular as little as possible out of the depth portion (11') into a remaining cargo cavity (30) towards a center (33) of the cargo space (30).

3. The folding rack (1) according to one of the preceding claims,
**characterized in that**
the folding rack (1) includes a longitudinal beam, in particular a longitudinal tube (6), which is connected in the upper portion on the one hand side with the columns (2), in particular through clamps (7), and on the other hand side with the stiffening profiles (31) of the cargo space (30) of the commercial vehicle (32), in particular through top angles (28).

4. The folding rack (1) according to claim 3,
**characterized in that**
the longitudinal beam, in particular the longitudinal tube (6), is arranged laterally adjacent to the columns (2) towards a vehicle center or above ends of the columns (2) between the columns (2) and a roof of the cargo space (32), and/or the longitudinal tube (6) is made from plastic material, in particular from fiber reinforced plastic material.

5. The folding rack (1) according to claims 3 or 4,
**characterized in that**
the longitudinal beam, in particular the longitudinal tube (6), has an external diameter of at least 50%, better at least 80%, and at the most 110% of the extension of the columns (2) in the depth direction (11).

6. The folding rack (1) according to one of the preceding claims,
**characterized in that**
the shelfs (3) are connected with each other in the extension direction (10) in their front portion which protrudes in an activated condition towards a vehicle center (33).

7. The folding rack (1) according to one of the preceding claims,
**characterized in that**
the shelfs(3), in particular the base plates (15), are made from aluminum or plastic material.

8. The folding rack (1) according to one of the preceding claims,
**characterized in that**
an upward protruding profile rubber (16) is arranged in the front profile (12).

9. The folding rack (1) according to one of the preceding claims,
**characterized in that**
stop blocks (17) are provided at sides of the columns (2) below the pivot axes (9) and configured to contact the shelfs (3) in an activated downward folded condition, and the stop blocks (17) include in particular a stop that is movable in the depth direction and made from a stop wedge (18) that is made from a synthetic material and that tapers in the depth direction.

10. The folding rack (1) according to one of the preceding claims,
**characterized in that**
the back profile (13) contacts at lateral ends in an internal angle of a support angle (20), wherein the support angle includes an eye (21) in particular at an outside of the arm that is at a bottom in the activated condition, wherein the eye is configured to attach e.g., an upper end of a gas pressured spring (19) wherein the gas pressure spring is attached with its lower end at the column (2) and is shorter than a vertical distance of two shelfs (3) that are arranged on top of each other.

11. The folding rack (1) according to claim 10,
**characterized in that**
an upper attachment point of the gas pressure spring (19) in particular the eye (21) is arranged at the shelf base (3) relative to the pivot axis (9) so that the attachment point is at an elevation below the pivot axis (9) in the activated condition as well as in the deactivated condition of the shelf base (3).

12. The folding rack (1) according to one of the preceding claims,
**characterized in that**
a load safety device, in particular a load safety profile (22) for hooking up commercially available load safety belts is arranged in the back profile (13) and/or in the front profile (12).

13. A kit for producing a folding rack (1), the kit comprising:
- at least one type of shelfs (3),
- at least one type of folding devices (5),
- at least one type of longitudinal struts, in particular longitudinal tubes (6),
- at least one type of brackets (7),
- optionally various types of differently cambered columns (2), and
- various types of roof angles (8),
wherein
- the shelf (3) includes a front profile (12), a back profile (13) and side profiles (14) and at least one base plate (15),
**characterized in that**
- the base plate (15) is a base plate profile (26),
- each shelf (3) is configured from plural profiles that extend in the orientation of extension (10) of the folding shelf (1) and thus of the respective shelf (3) which are inserted into one another in the depth direction and advantageously interlocked.

14. The kit according to claim 13,
**characterized in that** the kit includes various types, in particular shelfs (3) that have different length and/or different depth and therefore also includes front profiles (12), back profiles (13) and base plates (15) of the shelf bases (3) with different length, and/or base plates (15) with different depths.

15. The kit according to one of the preceding claims,
**characterized in that**
the kit includes a cargo safety net which deploys in an activated condition, in particular automatically between the columns (2) and the side profiles (14) of the shelf (3) and in particular causes the activated shelf (3) to be suspended from the columns (2), e.g. by a suspension cable that is integrated into the cargo safety net.

## Revendications

1. Système d'étagères pliables (1) pour le montage, par exemple, dans l'espace de chargement (30) d'un véhicule utilitaire (32) avec
- des colonnes (2) verticales, espacées dans la direction d'extension (10) du système d'étagères pliables (1),
- au moins une étagère (3) fixée aux colonnes (2) et pliable autour d'un axe de pivotement (9) s'étendant dans la direction d'extension (10) entre une position activée et une position désactivée, au moyen d'un dispositif de pliage (5),
- où
chaque étagère (3) est arrangée dans l'espace intermédiaire (4) entre deux colonnes adjacentes (2) respectives,
- l'étagère (3) comprend un profilé avant (12), un profilé arrière (13) et des profilés latérales (14) ainsi qu'au moins une plaque de base (15),
**caractérisé en ce que**
- la plaque de base (15) est un profilé de base (26),
- chaque étagère (3) est constituée de plusieurs profilés s'étendant dans la direction d'extension (10) du système d'étagères pliables (1) et ainsi de l'étagère (3) respective, qui sont emboîtés les uns dans les autres et de préférence enclenchés dans la direction de profondeur (11).

2. Système d'étagères pliables (1) selon la revendication 1,
**caractérisé en ce que**
chaque étagère (3) est arrangée de sorte que dans la position désactivée elle s'étend dans la direction de la profondeur (11), au moins partiellement dans la zone de profondeur (11') des colonnes (2), tout en faisant le moins possible saillie de la zone de profondeur (11') dans le reste de l'espace de chargement (30) en direction du centre (33) de l'espace de chargement (30).

3. Système d'étagères pliables (1) selon une des revendications précédentes,
**caractérisé en ce que**
le système d'étagères pliables (1) comprend une traverse longitudinale, en particulier un tube longitudinal (6), qui est dans la région supérieure connecté d'un côté aux colonnes (2), en particulier via des colliers (7), et d'autre côté aux profilés de renforcement (31) de l'espace de chargement (30) du véhicule utilitaire (32), en particulier via des équerres (28).

4. Système d'étagères pliables (1) selon la revendication 3,
**caractérisé en ce que**
la traverse longitudinale, en particulier le tube longitudinal (6), est arrangé latéralement à côté des colonnes (2) en direction du centre du véhicule ou au-dessus des extrémités des colonnes (2) entre les colonnes (2) et le toit de l'espace de chargement (32) ou/et le tube longitudinal (6) est adapté en matière plastique, en particulier en matière plastique renforcée de fibres.

5. Système d'étagères pliables (1) selon la revendication 3 ou 4,
**caractérisé en ce que**
la traverse longitudinale, en particulier le tube longitudinal (6), a un diamètre extérieur d'au moins 50%, mieux d'au moins 80% et n'excédant pas 110% de l'extension des colonnes (2) dans la direction de profondeur (11).

6. Système d'étagères pliables (1) selon une des revendications précédentes,
**caractérisé en ce que**
les étagères (3) sont connectées dans la direction d'extension (10) dans leur région frontale faisant, dans l'état activé, saillie en direction du centre du véhicule (33).

7. Système d'étagères pliables (1) selon une des revendications précédentes,
**caractérisé en ce que**
les étagères (3), en particulier les plaques de fond (15) sont faites d'aluminium ou de matière plastique.

8. Système d'étagères pliables (1) selon une des revendications précédentes,
**caractérisé en ce que**
une bande profilée en caoutchouc (16) faisant saillie vers le haut est arrangée dans le profilé avant (12).

9. Système d'étagères pliables (1) selon une des revendications précédentes,
**caractérisé en ce que**
des butées (17) sont arrangées aux côtés des colonnes (2) en dessous des axes de pivotement (9) pour placer les étagères dans la position activée rabattue vers le bas, et **en ce que** les butées (17) comprennent en particulier un revêtement déplaçable dans la direction de profondeur fait d'une butée d'arrêt (18) en matière plastique se rétrécissant dans la direction de profondeur.

10. Système d'étagères pliables (1) selon une des revendications précédentes,
**caractérisé en ce que**
le profilé arrière (13) repose aux extrémités latérales dans l'angle intérieur d'un angle de support (20), comprenant en particulier à son côté extérieur de la branche inférieure dans l'état activé un oeillet (21) pour fixer par exemple l'extrémité supérieure d'un ressort à gaz (19) qui est attaché à la colonne (2) par son extrémité inférieure est qui est plus court que la distance verticale de deux étagères (3) arrangées l'une au-dessus de l'autre.

11. Système d'étagères pliables (1) selon la revendication 10,
**caractérisé en ce que**
le point de fixation supérieur du ressort à gaz (19), en particulier l'oeillet (21), est arrangé à l'étagère (3) par rapport à l'axe de pivotement (9) de telle manière que le point de fixation se trouve et dans l'état activé et dans l'état désactivé de l'étagère (3) dans une position de hauteur en dessous de l'axe de pivotement (9).

12. Système d'étagères pliables (1) selon une des revendications précédentes,
**caractérisé en ce que**
un dispositif de sécurisation du chargement, en particulier un profilé de sécurisation du chargement (22) pour fixer des sangles de sécurisation du chargement usuelles, est arrangé au profilé arrière (13) et/ou au profilé avant (12).

13. Kit de construction pour réaliser un système d'étagères pliables (1) avec
- au moins un type d'étagères (3),
- au moins un type de dispositifs de pliage (5)
- au moins un type de traverses longitudinales, en particulier de tubes longitudinales (6),
- au moins un type de colliers (7),
- le cas échéant plusieurs types de colonnes (2) en particulier avec des courbures différentes, et
- plusieurs types d'équerres de fixation au toit (8),
où
- l'étagère (3) comprend un profilé avant (12), un profilé arrière (13) et des profilés latéraux (14) ainsi qu'au moins une plaque de base (15),
**caractérisé en ce que**
- la plaque de base (15) est un profilé de plaque de base (26),
- chaque étagère (3) est construite de plusieurs profilés s'étendant dans la direction d'extension (10) du système d'étagères pliables (1) et ainsi de l'étagère respective (3), qui sont emboîtés les uns dans les autres et de préférence enclenchés dans la direction de profondeur (11).

14. Kit selon la revendication 13,
**caractérisé en ce que**
le kit comprend plusieurs types d'étagères (3), en particulier de longueur différente ou/et de profondeur différente, et comprend à cette fin des profilés avant (12), des profilés arrière (13) et des plaques de base (15) des étagères (3) de longueur différente et/ou des plaques de base (15) de profondeur différente.

15. Kit selon une des revendications différentes,
**caractérisé en ce que**
le kit comprend un filet de sécurisation du chargement qui, dans l'état activé, s'étend en particulier automatiquement entre les colonnes (2) et les profilés latéraux (14) de l'étagère (3) et mène en particulier à une suspension de l'étagère (3) activée par rapport aux colonnes (2), par exemple au moyen d'un câble de suspension intégré dans le filet de sécurisation du chargement.
